# EUROPÄISCHE PATENTSCHRIFT

(11) **EP 0 743 460 B1**
(45) Veröffentlichungstag und Bekanntmachung des Hinweises auf die Patenterteilung: **28.08.2002**
(21) Anmeldenummer: 96106918.4
(22) Anmeldetag: 02.05.1996
(51) Int. Cl.: F15B 13/02

(54) **Elektrohydraulisches Hubmodul**
Electrohydraulic lifting device
Module de levage électrohydraulique

(30) Priorität: 19.05.1995 DE 29508392 U
(43) Veröffentlichungstag der Anmeldung: 20.11.1996
(73) Patentinhaber: HEILMEIER & WEINLEIN Fabrik für Oel-Hydraulik GmbH & Co. KG, 81673 München (DE)
(72) Erfinder: Heusser, Martin, D-81245 München (DE)
(74) Vertreter: Grünecker, Kinkeldey, Stockmair & Schwanhäusser Anwaltssozietät

(56) Entgegenhaltungen:
- EP-A- 0 056 423
- DE-A- 4 239 321
- US-A- 3 401 521

## Beschreibung

Die Erfindung betrifft ein elektrohydraulisches Hubmodul der im Oberbegriff des Patentanspruchs angegebenen Art.

Bei einem aus DE-A1-42 39 321 bekannten Hubmodul dämpft die Dämpfdrossel Druckschwingungen beim Öffnen der Druckwaage bzw. bei der Senksteuerung des Hubzylinders, beispielsweise eines Hubstaplers. Da der Proportionalmagnet der Meßblende elektrisch angesteuert wird, hat der Staplerfahrer keine Möglichkeit, etwa wie bei einem manuell gesteuerten Hubmodul, Druckschwingungen von Hand auszugleichen. Solche Druckschwingungen im Steuerkreis wirken sich auf die Last und den Arbeitskreis aus und müssen abgedämpft werden. Dies ist schwierig, da sich im Steuerkreis bei Druckschwingungen nur sehr kleine Druckmittelvolumina bewegen, deren Abdämpfung eine extrem kleine Drossel erfordern. Drosselbohrungen von 0,1 mm oder weniger, wie sie hiefür benötigt werden, sind herstellungstechnisch jedoch kaum zu realisieren.

Zum technologischen Hintergrund wird verwiesen auf EP-A-0 056 423 und US-A-3 402 521.

Der Erfindung liegt die Aufgabe zugrunde, ein elektrohydraulisches Hubmodul der eingangs genannten Art dahingehend zu verbessern, daß Druckschwingungen im Steuerkreis auf technisch einfache und kostengünstige Weise gedämpft werden.

Die gestellte Aufgabe wird mit den Merkmalen des Patentanspruchs 1 gelöst.

Eine Kaskadendrossel ist ein preiswertes Element, das auch bei extrem kleinen Druckmittelmengen ausreichend stark dämpft. Die Kaskadendrossel läßt sich baulich einfach in das Hubmodul integrieren. Die Kaskadendrossel dämpft weitestgehend viskositätsunabhängig. Druckschwingungen im Steuerkreis eines Hubmoduls müssen sowohl bei kaltem als auch betriebswarmem Druckmittel in gleicher Weise unterdrückt werden, was normalerweise einen technischen Kompromiß bedingt, da eine viskositätsabhängige Dämpfdrosselbohrung, die in ihrer Dämpfwirkung auf betriebswarmes Druckmittel ausgelegt ist, bei kaltem Druckmittel zu stark dämpft bzw. umgekehrt. Dieser Kompromiß wird durch die Kaskadendrossel vermieden, weil die Kaskadendrossel unabhängig von der Temperatur des Druckmittels gleich dämpft.

Eine baulich einfache, kompakte Ausführungsform geht aus Anspruch 2 hervor. Die Schließbewegung der Druckwaage sollte unverzögert zu steuern sein, z.B. mittels eines Rückschlagventils, das dann das Steuerdruckmittel weitgehend ungedrosselt abströmen läßt. Die Dämpfung ist dann aber nur für die Öffnungsbewegung der Druckwaage wirksam. Die Kaskadendrossel in dem Rückschlagventil wirkt nur bei der Öffnungsbewegung der Druckwaage. Das Rückschlagventil und die Dämpfdrossel beeinträchtigen sich gegenseitig nicht, obwohl in vorteilhafter Weise Komponenten der Dämpfdrossel und des Rückschlagventils für beide Funktionen herangezogen werden.

Einfach herzustellen ist die Ausführungsform gemäß Anspruch 3. Die Drosselwirkung läßt sich durch die Durchmesser der kleindurchmeßrigen Durchbohrungen und die Dicke und Anzahl der Blendenplättchen sozusagen maßschneidern und an die jeweiligen Anforderungen anpassen. Die kleindurchmeßrigen Bohrungen in die relativ dünnen Blendenplättchen einzubringen (zu bohren oder zu stanzen) ist herstellungstechnisch einfach.

Besonders wichtig ist das Merkmal von Anspruch 4. Die jeweils ersten Kaskadenelemente (es können auch mehr als nur das erste Kaskadenelement mit mehreren Durchbohrungen versehen sein) haben die Wirkung eines Filters, das Verschmutzungen auffängt und am Verlegen der Durchbohrungen der weiter innen angeordneten Blendenplättchen hindert. Sollte eine oder mehrere der Durchbohrungen des ersten Blendenplättchens durch Verschmutzungen verlegt sein, so bleiben dennoch ausreichend viele Durchbohrungen übrig, um die Durchströmung der Kaskadendrossel sicherzustellen.

Montage- und wartungstechnisch ist die Ausführungsform gemäß Anspruch 5 vorteilhaft. Der Einschraubventileinsatz kann an passender Stelle angebracht werden und leistet dann die gewünschte Rückschlag- und Drosselfunktion für das Steuerdruckmittel. Der Einschraubventileinsatz baut klein und kompakt.

Vorteilhaft ist die Ausführungsform gemäß Anspruch 6, bei der auch die Dämpfdrossel der Meßblende als Kaskadendrossel ausgebildet ist, die sich besonders für Großserien kostengünstig herstellen läßt.

Anhand der Zeichnung werden Ausführungsformen des Erfindungsgegenstandes erläutert. Es zeigen:
- Fig. 1: ein Blockschaltbild einer hydraulischen Steuervorrichtung mit einem elektrohydraulischen Hubmodul,
- Fig. 2: einen Teilschnitt einer gegenständlichen Ausbildung des Hubmoduls, und
- Fig. 3: eine Detailvariante.

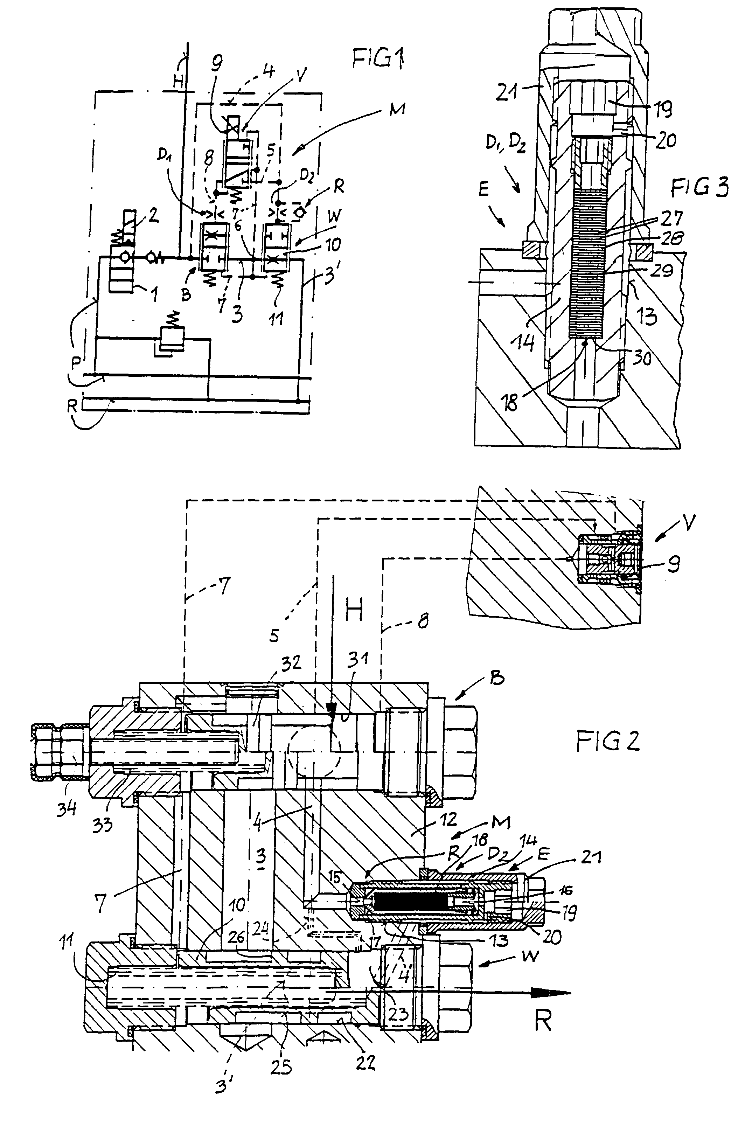

Ein hydraulische Steuervorrichtung, beispielsweise eines Hubstaplers, gemäß Fig. 1 weist eine Pumpenleitung P und eine Rücklaufleitung R auf, um Bewegungen eines nichtgezeigten Hubzylinders zu steuern, dem über eine Arbeitsleitung H entweder Druckmittel zugeführt oder aus dem über die Arbeitsleitung H Druckmittel in die Rücklaufleitung R abgelasssen wird. Zum Detailaufbau und zur detaillierten Funktion der Steuervorrichtung gemäß Fig. 1 wird auf die DE-A1-42 39 321 verwiesen, die mehrere Möglichkeiten zur Gestaltung solcher Steuervorrichtungen erläutert.

Zwischen der Pumpenleitung P und der Arbeitsleitung H ist ein Schaltventil 1 eingeordnet, das mittels eines Magneten 2 zwischen der dargestellten Absperrstellung und einer Durchgangsstellung umschaltbar ist, um der Arbeitsleitung H Druckmittel zuzuführen. Von der Arbeitsleitung H zweigt eine Ablaßleitung 3, 3' zur Rücklaufleitung R ab. In der Ablaßleitung 3 ist ein elektrohydraulisches Hubmodul M vorgesehen, das zur elektrischen Bewegungssteuerung des Hydroverbrauchers, zumindest in Senkrichtung, dient. Bei der Abzweigung der Arbeitsleitung H von der Pumpenleitung P zweigt eine Steuerleitung 4 ab, die zur Schließseite einer Druckwaage W führt, und von der eine Steuerleitung 5 zu einem Anschluß eines Vorsteuerventils V führt. Zwischen der Abzweigung der Steuerleitung 4 von der Ablaßleitung 3 und der Druckwaage W in der Ablaßleitung 3 ist eine Meßblende B angeordnet. Von der Ablaßleitung 3 zweigt bei 6 zwischen der Meßblende B und der Druckwaage W eine Steuerleitung 7 ab, die einerseits zur Schließseite der Meßblende B und zur Öffnungsseite der Druckwaage W, und andererseits zu einem zweiten Anschluß des Vorsteuerventils V sowie zu dessen Vorsteuerseite führt. Ein Auslaß des Vorsteuerventils sowie dessen andere Vorsteuerseite sind über eine weitere Steuerleitung 8 mit der Öffnungsseite der Meßblende B verbunden. Das Vorsteuerventil ist ein 3/2-Wegeregelventil, das mittels eines Proportionalmagneten 9 in Abhängigkeit von dessen Bestromung mehr oder weniger gegen die Kraft einer Schließfeder verstellt wird. Bei nichtbestromten Proportionalmagneten (Fig. 1) ist die Steuerleitung 5 von der Steuerleitung 8 getrennt, während die Steuerleitung 7 mit der Steuerleitung 8 verbunden ist. In der anderen Endstellung des Vorsteuerventils V bei vollbestromtem Proportionalmagneten 9 - ist hingegen die Steuerleitung 7 von der Steuerleitung 8 getrennt und die Steuerleitung 5 wird mit der Steuerleitung 8 verbunden. Das Vorsteuerventil V dient dazu, die Meßblende B zwischen der in Fig. 1 gezeigten Absperrstellung und einer nichtgezeigten Durchgangsstellung einzustellen bzw. in Zwischenstellungen, um eine bestimmte Druckdifferenz zwischen der Abzweigung der Steuerleitung 4 und der Abzweigung der Steuerleitung 7 einzustellen. Diese eingestellte Druckdifferenz (eingestellte Menge bzw. eingestellte Geschwindigkeit des Hydroverbrauchers) wird mittels der Druckwaage W gehalten, die zum Einhalten dieser Druckdifferenz mehr oder weniger Druckmittel über den Zweig 3' der Ablaßleitung zur Rücklaufleitung gelangen läßt.

Die Druckwaage W enthält einen Regelkolben 10, der in Öffnungsrichtung durch eine Regelfeder 11 beaufschlagt wird. Der Steuerdruck in der Steuerleitung 4 wirkt an dem Regelkolben 10 in Schließrichtung der Druckwaage. In der Steuerleitung 4 ist eine Dämpfdrossel D2 vorgesehen, die in Strömungsrichtung zum Regelkolben 10 durch ein Rückschlagventil R umgehbar ist. Auch in der Steuerleitung 8 zur Meßblende B kann eine Dämpfdrossel D1 vorgesehen sein.

Fig. 1 verdeutlicht nur eine Möglichkeit von mehreren. Beispielsweise lassen sich die Positionen der Druckwaage und der Meßblende in der Ablaßleitung 3 vertauschen, wobei auch der Steuerleitungsverlauf entsprechend geändert werden muß, damit die Druckwaage die Druckdifferenz, die über die Meßblende eingestellt wird, an ihren Schließ- und Öffnungsseiten abtastet. Ferner läßt sich die Meßblende B direkt durch einen Proportionalmagneten und ohne Zuhilfenahme eines Vorsteuerventils V verstellen.

In der Schnittdarstellung von Fig. 2 befindet sich der Regelkolben 10 der Druckwaage W in einer Bohrung 22 eines Gehäuses 12, das auch zumindest die Meßblende B enthält. Der Regelkolben 10 wird in der in der oberen Hälfte gezeigten Schließstellung durch die Regelfeder 11 und den Druck in der Steuerleitung 7 beaufschlagt. In der Gegenrichtung wirkt der Druck aus der Steuerleitung 4, 4' in einer Kammer 23 auf den Regelkolben 10. Der Regelkolben besitzt eine Umfangsnut 25 mit einer Flanke 26, die die Verbindung zwischen einer Mündung der Ablaßleitung 3 und einer Mündung des Astes 3' der Ablaßleitung überwacht, und zwar mit positiver Überdeckung. Dies bedeutet, daß zwischen den Mündungen der Ablaßleitung 3 und 3' in axialer Richtung der Bohrung 22 ein Abstand vorliegt, den eine Umfangsdichtzone des Regelkolbens 10 nutzt, um die Mündungen gegeneinander abzudichten. Es handelt sich hier um eine staplerdichte Druckwaage, was bedeutet, daß die Druckwaage in ihrer Schließstellung dazu geeignet ist, den Lastdruck der Arbeitsleitung H aufzunehmen und eine Last zu halten. Unter staplerdicht versteht man in dieser Technik eine Dichtigkeit, mit der eine Last über 10 bis 20 Minuten ohne nennenswertes Nachgeben gehalten wird. Die positive Überdeckung beträgt zwischen 2 und 2,5 mm bei einem Kolbendurchmesser von ca. 18 mm. Zwischen dem Regelkolben 10 und der Bohrung 22 ist eine enge Passung mit einem Passungsspiel zwischen 2 bis 10 µ vorgesehen. Die Druckwaage W ist somit geeignet, Lastdrücke bis rund 200 bar zu halten und nur eine Leckage von weniger als 1,0 cm³ pro Minute zuzulassen, wobei Staplerdichtigkeit eine Leckage zwischen 7 und 10 cm³ pro Minute tolerieren würde.

In einer weiteren Gehäusebohrung 31 ist ein Meßkolben 32 der Meßblende B in Abhängigkeit von den Drücken in der Steuerleitung 7 und der Steuerleitung 8 sowie einer Feder 33 verstellbar, um das Druckmittel aus der Arbeitsleitung H in die Ablaßleitung 3 abströmen zu lassen und dabei die am Vorsteuerventil V mittels des Proportionalmagneten 9 eingestellte Druckdifferenz zu erzeugen, die dann von der Druckwaage W durch eine bestimmte Regelstellung des Regelkolbens eingehalten wird, wobei die Druckwaage W auf Druckänderungen stromauf und stromab der Meßblende B anspricht.

Die Dämpfdrossel D2 ist in einem Einschraubventil-Einsatz E enthalten, der in eine Aufnahmebohrung 13 eingeschraubt ist, die die Steuerleitung 4, 4' schneidet. Die Dämpfdrossel D2 enthält eine Kaskadendrossel 18, deren Detailaufbau besser aus Fig. 3 zu entnehmen ist. Die Kaskadendrossel 18 ist in einem hohlen, einen axialen Durchströmweg aufweisenden Ventilkörper 17 untergebracht, der mit einem Ventilsitz 15 eines Einschraubkörpers 14 zusammenarbeitet, um das Rückschlagventil R zu definieren, das in Strömungsrichtung zur Steuerkammer 23 öffnet, und in der entgegengesetzten Strömungsrichtung absperrt, so daß dann das Druckmittel den Weg über die Kaskadendrossel 18 nimmt. Im hinteren Ende des Ventilelements 17 ist eine Bohrung 16 vorgesehen, hinter der ein seitlicher Kanal 20 gebohrt ist. Eine Kappe 21 ist auf das Einschraubgehäuse 14 aufgeschraubt und dichtet gegen das Gehäuse 12 ab. Im Einschraubeinsatz 14 ist eine Drehhilfe 19 eingeformt, um das Einschraubgehäuse 14 zunächst anziehen zu können, ehe die Kappe 21 aufgeschraubt wird.

Ferner ist in Fig. 2 strichliert ein Beipaßkanal 24 angedeutet, der die Steuerkammer 23 unter Umgehung des Rückschlagventils R und der Kaskadendrossel 18 direkt mit der Steuerleitung 4 verbinden könnte. Die Mündung des Beipaßkanals 24 ist so in der Wand der Bohrung 22 angeordnet, daß sie in der Schließendstellung des Regelkolbens 10 frei ist und erst dann abgesperrt wird, wenn der Regelkolben 10 sich nach rechts bewegt hat und beginnt, die Mündung der Ablaßleitung 3 mit der Mündung des Astes 3' der Ablaßleitung zu verbinden. Der Beipaßkanal 24 bietet den Vorteil einer zügigen Öffnungsbewegung des Regelkolbens 10 bis zu einer anfänglichen Öffnungsstellung, ab der dann das Steuerdruckmittel den Weg über die Kaskadendrossel 18 zu nehmen gezwungen ist.

Die Kaskadendrossel 18 gemäß Fig. 3 besteht aus einer Vielzahl von Kaskadenelementen 27, die als Blendenplättchen ausgebildet sind und, z.B., jeweils eine kleindurchmeßrige Durchbohrung 29 besitzen. Das jeweils erste oder die jeweils ersten Blendenplättchen der Kaskadendrossel 18 weisen mehrere kleindurchmeßrige Durchbohrungen 30 auf, um eine Filterwirkung für Verunreinigungen zu erbringen. Die Kaskadenelemente sind durch dazwischengelegte Distanzringe 28 voneinander getrennt und werden in axialer Richtung verspannt. Der Einschraubventil-Einsatz E gemäß Fig. 3 ist ohne Rückschlagventilfunktion dargestellt und kann beispielsweise als die Dämpfdrossel D1 für die Meßblende B verwendet werden. Es ist aber auch denkbar, den Einsatz E als die Dämpfdrossel D2 für die Druckwaage W zu benutzen, falls diese in Öffnungs- und Schließrichtung gedämpft werden soll bzw. sofern das Rückschlagventil R getrennt vorgesehen ist.

## Patentansprüche

1. Elektrohydraulisches Hubmodul (M) für einen einseitig aus einer Druckquelle (P) über eine Arbeitsleitung (H) beaufschlagbaren Hydroverbraucher, insbesondere einen Hubzylinder, mit einem Zweiwege-Mengenregler (B, W) in einer zwischen der Arbeitsleitung (H) und einer Rücklaufleitung (R) angeordneten Ablaßleitung (3, 3'), wobei der Zweiwege-Mengenregler eine mittels eines Proportionalmagneten (9) verstellbare Meßblende (B) und eine staplerdichte Druckwaage (W) aufweist, die schließseitig aus einer ersten Steuerleitung (4) und öffnungsseitig durch eine Regelfeder (11) und über eine zweite Steuerleitung (7) beaufschlagt ist, und mit einer in der ersten Steuerleitung (4) angeordneten Dämpfdrossel (D2) zumindest für den Öffnungshub der Druckwaage (W), **dadurch gekennzeichnet, daß** die Dämpfdrossel (D1, D2) eine Kaskaden-drossel (18) mit einer Vielzahl von Kaskadenelementen (27) ist.

2. Hubmodul nach Anspruch 1, **dadurch gekennzeichnet, daß** die Dämpfdrossel (D2) in Strömungsrichtung zur Schließseite der Druckwaage (W) über ein Rückschlagventil (R) umgangen wird, und daß das Rückschlagventil (R) ein hohl ausgebildetes, mit einem Ventilsitz (15) zusammenwirkendes Ventilelement (14) aufweist, das einen in den Ventilsitz (15) mündenden Strömungsweg besitzt, und daß die Kaskadendrossel (18) im Ventilelement (14) des Rückschlagventils (R) angeordnet ist.

3. Hubmodul nach Anspruch 2, **dadurch gekennzeichnet, daß** die Kaskadenelemente (27) Blendenplättchen mit mindestens je einer kleindurchmeßrigen Durchbohrung (29) sind, die unter Zwischenlage von Distanzringen (28) quer zum Strömungsweg positioniert sind.

4. Hubmodul nach Anspruch 2, **dadurch gekennzeichnet, daß** zumindest das jeweils erste Kaskadenelement mehrere kleindurchmeßrige Durchbohrungen (30) aufweist.

5. Hubmodul nach wenigstens einem der Ansprüche 1 bis 4, **dadurch gekennzeichnet, daß** das Rückschlagventil (R) als Einschraubventileinsatz mit wenigstens einem Außengewindeabschnitt ausgebildet und, vorzugsweise, in eine Aufnahmebohrung (13) eines zumindest die Druckwaage (W) enthaltenden Gehäuses (12) von außen eingeschraubt ist, daß die Aufnahmebohrung (13) die Steuerleitung (4, 4') schneidet, und daß auf den Einschraubventileinsatz (E) eine gegen das Gehäuse (12) abdichtende Kappe (21) aufgeschraubt ist.

6. Hubmodul nach Anspruch 1, **dadurch gekennzeichnet, daß** eine der Meßblende (B) in einer Steuerleitung (8) zugeordnete Dämpfdrossel (D1) ebenfalls als Kaskadendrossel (18), vorzugsweise in einem Einschraubventil-Einsatz (E), ausgebildet ist.

## Claims

1. Electohydraulic lifting module (M) for a hydraulic load, in particular a lifting cylinder, which can be subjected to the action of a pressure source (P) on one side via a working line (H), having a two-way volume controller (B, W) in a discharge line (3, 3') arranged between the working line (H) and a return line (R), the two-way volume controller having a metering orifice (B), which can be adjusted by means of a proportional magnet (9), and a pressure balance (W), which is sealed to a stacker and is subjected to the action, on the closure side, of a first control line (4) and, on the opening side, of a regulating spring (11) and a second control line (7), and having a damping restrictor (D2) which is arranged in the fist control line (4) and is intended at least for the opening stroke of the pressure balance (W), **characterized in that** the damping restrictor (D1, D2) is a cascade restrictor (18) with a multiplicity of cascade elements (27).

2. Lifting module according to Claim 1, **characterized in that** the damping restrictor (D2) is bypassed via a non-return valve (R) in the flow direction to the closure side of the pressure balance (W), and **in that** the non-return valve (R) has a hollow valve element (14) which interacts with a valve seat (15) and has a flow path opening out into the valve seat (15), and **in that** the cascade restrictor (18) is arranged in the valve element (14) of the non-return valve (R).

3. Lifting module according to Claim 2, **characterized in that** the cascade elements (27) are orifice plates each with at least one small-diameter through-bore (29), which are positioned transversely to the flow path with the interposition of spacer rings (28).

4. Lifting module according to Claim 2, **characterized in that** at least the respectively first cascade element has a plurality of small-diameter through-bores (30).

5. Lifting module according to at least one of Claims 1 to 4, **characterized in that** the non-return valve (R) is designed as a screw-in valve insert with at least one externally threaded section and is screwed from the outside, preferably, into an accommodating bore (13) of a housing (12) which contains at least the pressure balance (W), **in that** the accommodating bore (13) intersects the control line (4, 4') and **in that** a cap (21) which has a sealing action in relation to the housing (12) is screwed onto the screw-in valve insert (E).

6. Lifting module according to Claim 1, **characterized in that** a damping restrictor (D1) assigned to the metering orifice (B) in a control line (8) is likewise designed as a cascade restrictor (18), preferably in a screw-in valve insert (E).

## Revendications

1. Module de levage électrohydraulique (M) pour un consommateur hydraulique, en particulier un cylindre de levage, pouvant être alimenté d'un côté par l'intermédiaire d'une conduite de travail (H) à partir d'une source de pression (P), comprenant un régulateur de débit à deux voies (B, W) dans une conduite d'échappement (3, 3') disposée entre la conduite de travail (H) et une conduite de retour (R), le régulateur de débit à deux voies présentant un diaphragme de mesure (B) réglable au moyen d'un aimant proportionnel (9) et une balance de pression (W) étanche au gerbeur, qui est sollicitée côté fermeture à partir d'une première conduite pilote (4) et côté ouverture par un ressort de réglage (11) et par l'intermédiaire d'une seconde conduite pilote (7), et comprenant un étranglement d'amortissement (D2) disposé dans la première conduite pilote (4) au moins pour la course d'ouverture de la balance de pression (W), **caractérisé en ce que** l'étranglement d'amortissement (D1, D2) est un étranglement en cascade (18) avec une multiplicité d'éléments en cascade (27).

2. Module de levage suivant la revendication 1, **caractérisé en ce que** l'étranglement d'amortissement (D2) est contourné dans le sens d'écoulement en direction du côté fermeture de la balance de pression (W) par l'intermédiaire d'un clapet antiretour (R), **en ce que** le clapet antiretour (R) présente un élément de soupape (14) de réalisation creuse, concourant avec un siège de soupape (15), et présentant un parcours d'écoulement débouchant dans le siège de soupape (15), et **en ce que** l'étranglement en cascade (18) est disposé dans l'élément de soupape (14) du clapet antiretour (R).

3. Module de levage suivant la revendication 2, **caractérisé en ce que** les éléments en cascade (27) sont des lamelles de diaphragme avec au moins une perforation (29) respective de petit diamètre, qui sont positionnées avec intercalation de bagues d'écartement (28) transversales au parcours d'écoulement.

4. Module de levage suivant la revendication 2, **caractérisé en ce qu'**au moins le premier élément en cascade respectif présente plusieurs perforations (30) de petit diamètre.

5. Module de levage suivant l'une au moins des revendications 1 à 4, **caractérisé en ce que** le clapet antiretour (R) est réalisé sous forme de mécanisme de valve fileté avec au moins une section de filetage extérieur et, de préférence, est vissé de l'extérieur dans un trou de réception (13) d'un corps (12) comportant au moins la balance de pression (W), **en ce que** le trou de réception (13) coupe la conduite pilote (4, 4'), et **en ce qu'**un capuchon (21) assurant l'étanchéité par rapport au corps (12) est vissé sur le mécanisme de valve fileté (E).

6. Module de levage suivant la revendication 1, **caractérisé en ce qu'**un étranglement d'amortissement (D1), associé au diaphragme de mesure (B) dans une conduite pilote (8), est également réalisé sous forme d'étranglement en cascade (18), de préférence dans un mécanisme de valve fileté (E).
